# FASCICULE DE BREVET EUROPEEN

(11) **EP 1 295 102 B1**
(45) Date de publication et mention de la délivrance du brevet: **30.07.2008**
(21) Numéro de dépôt: 01938310.8
(22) Date de dépôt: 23.05.2001
(51) Int. Cl.: G01N 1/40, G01N 30/00, G01N 33/18, B01D 15/08, G01N 1/00

(54) **INSTALLATION ET PROCEDE POUR LA PREPARATION AUTOMATIQUE D'ECHANTILLONS**
ANORDNUNG UND VERFAHREN ZUR AUTOMATISIERTEN VORBEREITUNG VON PROBEN
INSTALLATION AND METHOD FOR AUTOMATIC PREPARATION OF SAMPLES

(30) Priorité: 23.05.2000 FR 0006551
(43) Date de publication de la demande: 26.03.2003
(73) Titulaire: Hocer, 44700 Orvault (FR)
(72) Inventeur: DUSSAUZE, Jacques, F-29470 Plougastel-Daoulas (FR); DELMAS, Roger, F-29470 Plougastel-Daoulas (FR); CAVALIN, Goulven, F-29200 Brest (FR); MUNOZ, Bernard-Jacky, F-44700 Orvault (FR)
(74) Mandataire: Laget, Jean-Loup
(86) Numéro de dépôt international: PCT/FR2001/001587
(87) Numéro de publication internationale: WO 2001/090722

(56) Documents cités:
- EP-A- 0 571 716
- EP-A- 0 892 267
- WO-A-93/07168
- WO-A-99/65587
- US-A- 4 070 284
- US-A- 4 154 583
- US-A- 4 500 432
- US-A- 5 117 109
- US-A- 5 449 902
- US-A- 5 512 168

## Description

La présente invention concerne une installation et un procédé pour la préparation automatique d'échantillons en vue d'une analyse sur un système de mesure adapté, tel qu'un spectromètre UV, un dispositif à infrarouge, un fluorimètre, un spectromètre de masse ou similaire.

L'invention s'applique plus particulièrement au suivi du traitement des eaux naturelles ou traitées éventuellement destinées à la consommation susceptibles de contenir des pesticides ou autres polluants organiques. Des réglementations de plus en plus sévères concernant les seuils de concentration admissibles dans les eaux potables ont obligé les industriels à développer de nouvelles installations entièrement automatisées permettant notamment une pré-concentration par extraction liquide/solide et une analyse en ligne des concentrats obtenus. Certaines installations ainsi développées n'ont pas remporté le succès escompté en raison du coût des analyses. Tel est le cas du système développé par la Société ZYMARCK, Cette installation effectue une concentration en ligne sur un disque absorbant. Une seule mesure est effectuée par disque. Une fois la mesure effectuée, le disque absorbant à usage unique est jeté. Il en résulte un coût important de l'analyse. De la même manière, l'installation développée par la Société SPARK est une installation de concentration sur cartouche en haute pression. Cette installation permet l'élution en ligne dans la sens de la charge d'un échantillon. Il n'y a pas de reconditionnement de la cartouche qui n'est utilisée qu'une fois. Par ailleurs, le fait de travailler en haute pression entraîne un surcoût des éléments nécessaires à la fabrication de l'installation. D'autres sociétés, telles que la Société HEWLETT PACKARD, ont toutefois envisagé le fonctionnement d'une installation en basse pression comme l'illustre la lettre produit de HEWLETT PACKARD publiée en octobre 1993 sous le numéro 12-5091-9364E. Ainsi la Société HEWLETT PACKARD fabrique et commercialise une installation HP 190 WIN/SPE avec un concentrateur Prospekt dans lequel il est prévu un carrousel portant plusieurs cartouches basse pression. Ce carrousel, faisant office de porte-cartouche, connecte à chaque échantillon une nouvelle cartouche. L'introduction de l'échantillon dans la cartouche se fait par percolation. Elution et chargement se font dans le même sens. II en résulte à nouveau un usage unique de la cartouche. Le fait de disposer d'un porte-cartouche permet toutefois l'utilisation pendant une durée relativement importante. Cette installation pour la préparation automatique d'échantillons, notamment de concentrats de composés organiques dissous dans une phase liquide, en vue d'une analyse en ligne sur un système de mesure adapté tel qu'un spectromètre UV, un dispositif à infrarouge, un fluorimètre, un spectomètre de masse ou similaire comprend :
a) un dispositif de prélèvement d'un échantillon liquide,
b) un dispositif de distribution comportant une vanne de préférence basse pression capable de sélectionner soit l'échantillon, soit l'un des différents solvants ou réactifs indispensables à un processus d'extraction liquide/solide,
c) une pompe basse pression permettant d'alimenter au débit choisi un dispositif d'extraction liquide/solide,
d) un dispositif d'extraction liquide/solide constitué d'une pluralité de colonnes comportant chacune au moins une phase adsorbante.
constitue l'état de la technique le plus pertinent à l'égard de l'invention.

Enfin, d'autres documents tels que le brevet US-A-4.070.284, qui décrit une installation de concentration sur pesticides à une seule colonne et les brevets US-A-4.500.432, EP-A-0.571.716, US-A-5.449.902, WO-A-99.65587 et US-A-5.117.109 illustrent l'arrière-plan technologique de l'invention.

Un but de la présente invention est de proposer une installation et un procédé pour la préparation automatique d'échantillons dont les conceptions respectives permettent d'une part de réduire l'usure des colonnes du dispositif d'extraction, autorisant ainsi leur réutilisation pendant un nombre de fois important dans des conditions de totale répétabilité, d'autre part de fonctionner de manière complètement automatique et autonome sur une période de temps importante.

Un autre but de la présente invention est de proposer une installation et un procédé dont les conceptions permettent de travailler en basse pression de manière à réduire les coûts de fabrication et d'exploitation d'une telle installation.

Un autre but de la présente invention est de proposer une installation dont la souplesse d'utilisation permet une maîtrise parfaite de l'extraction liquide/solide grâce à la possibilité de programmer et de configurer à la demande les différentes étapes du procédé d'extraction.

A cet effet, l'invention a pour objet une installation pour la préparation automatique d'échantillons, notamment de concentrats de composés organiques dissous dans une phase liquide, en vue d'une analyse sur un système de mesure adapté tel qu'un spectromètre UV, un dispositif à infrarouge, un fluorimètre, un spectromètre de masse ou similaire, cette installation comprenant
a) un dispositif de prélèvement d'un échantillon liquide,
b) un dispositif de distribution comportant une vanne de préférence basse pression capable de sélectionner soit l'échantillon, soit l'un des différents solvants ou réactifs indispensables à un processus d'extraction liquide/solide,
c) une pompe basse pression permettant d'alimenter au débit choisi un dispositif d'extraction liquide/solide,
d) un dispositif d'extraction liquide/solide constitué d'une pluralité de colonnes comportant chacune au moins une phase adsorbante,
installation caractérisée en ce que le dispositif d'extraction comporte, de part et d'autre des colonnes, une vanne pilotable de commutation d'une colonne à une autre pour mettre en action une colonne apte à assurer la fonction d'extraction lorsqu'une autre colonne est en état de non fonctionnement, chaque vanne de commutation étant reliée à une vanne à inversion de sens commune interposée entre la pompe basse pression et les vannes de commutation, cette vanne à inversion de sens pilotable étant agencée pour imposer un sens de circulation du fluide dans l'une quelconque des colonnes du dispositif d'extraction et assurer son retour à ladite vanne pour distribuer le fluide traité vers un circuit sélectif soit pour rejet, soit pour analyse.

Grâce à la conception de l'installation, qui permet d'une part un basculement automatique d'une colonne à une autre, d'autre part une régénération de la colonne après chaque analyse grâce à une circulation bidirectionnelle et à basse pression des fluides dans la colonne, il est possible de procéder à plus de quatre cents analyses en ligne sans nécessiter l'intervention d'un opérateur et ce selon un protocole de travail maîtrisé.

L'invention a encore pour objet un procédé de préparation d'échantillons de fluide, en particulier de concentrats, par extraction liquide/solide, en vue d'une analyse en ligne sur un système de mesure adapté tel qu'un spectromètre UV, un dispositif infrarouge, un fluorimètre, un spectromètre ou similaire, caractérisé en ce qu'il consiste à prélever un échantillon, à alimenter au débit choisi en échantillon ou en solvants un dispositif d'extraction à colonnes, à faire circuler au moyen d'une vanne à inversion de sens l'échantillon et/ou les solvants soit dans un sens, soit dans l'autre dans ledit dispositif d'extraction, à collecter à la vanne d'inversion, quel que soit le sens de circulation, le fluide traité pour l'amener vers un sélecteur délivrant le fluide traité soit vers un dispositif d'analyse, soit vers une installation de rejet, à détecter en temps réel et en continu l'état d'usure de la colonne (3) assurant la fonction d'extraction et à mettre en action, au moyen de vannes (4) de commutation, une autre colonne (3) apte à assurer la fonction d'extraction lorsque la colonne (3) active est détectée comme étant en état de non fonctionnement.

Un tel procédé permet une réutilisation de chaque colonne apte à procéder à plus de 80 analyses en ligne.

L'invention sera bien comprise à la lecture de la description suivante d'exemples de réalisation, en référence aux dessins annexés dans lesquels :

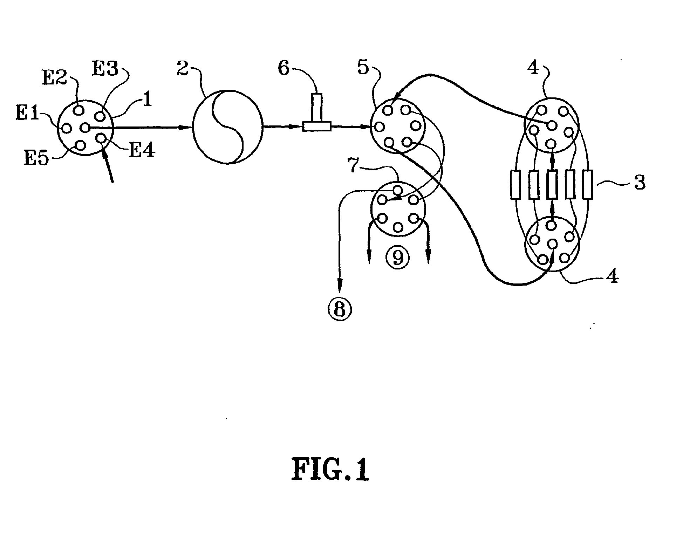

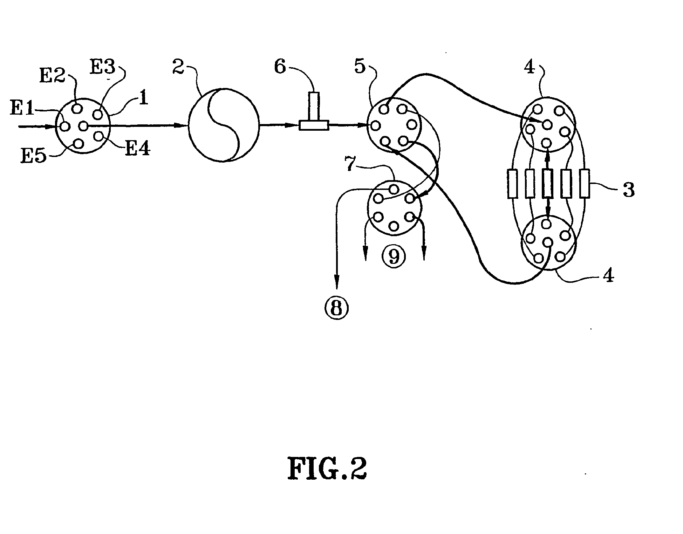

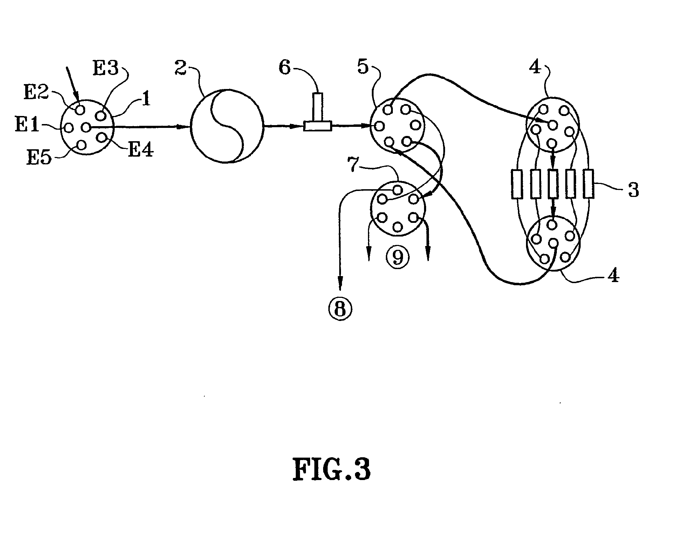

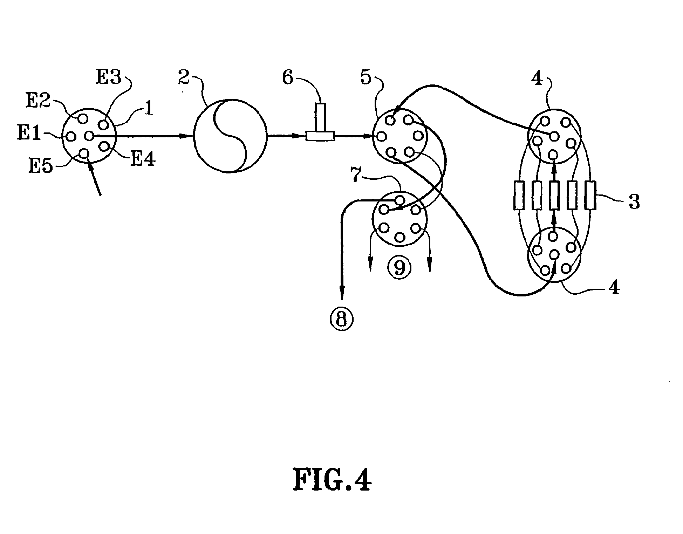

les figures 1 à 4 représentent de manière schématique les différents éléments constitutifs de l'installation et leur positionnement respectif au cours de quatre cycles d'une analyse incluant de manière successive un cycle de régénération, un cycle de chargement de l'échantillon, un cycle de rinçage et un cycle d'élution.

L'installation pour la préparation automatique d'échantillons est plus particulièrement destinée à permettre la préparation de concentrats de composés organiques dissous dans une phase liquide. Une telle installation est par exemple particulièrement adaptée à l'analyse en ligne d'échantillons des eaux naturelles ou traitées éventuellement destinées à la consommation dont la teneur en micropolluants organiques, en particulier en pesticides, doit être contrôlée.

Cette installation comporte, de manière en soi connue, un dispositif de prélèvement d'un échantillon liquide à analyser, ce dispositif de prélèvement pouvant être constitué par une simple pompe (non représentée). En aval de ce dispositif de prélèvement, il est prévu un dispositif de distribution comportant une vanne 1, de préférence basse pression, capable de sélectionner soit l'échantillon, soit l'un des différents solvants ou réactifs indispensables à un processus d'extraction liquide/solide. Dans les exemples représentés, cette vanne 1 basse pression comporte plusieurs entrées E₁ à E₅, reliées chacune à un solvant ou à un réactif ou à l'échantillon, et une sortie commune centrale reliant le dispositif de distribution à une pompe 2 volumétrique basse pression. Il est à noter qu'on entend par basse pression une pression inférieure à 7 bars. À titre d'exemple de dispositif de distribution, il peut être utilisé une vanne portant la référence Vanne Rheodyne-Labpro, de type basse pression 7 voies, 6 positions.

La pompe 2 volumétrique basse pression permet quant à elle d'alimenter au débit choisi un dispositif d'extraction liquide/solide constitué d'une pluralité de colonnes 3 comportant chacune au moins une phase adsorbante. Chaque colonne ou cartouche adsorbante, qui permet de fixer puis d'eluer et de concentrer les composés organiques, est composée généralement d'un tube de diamètre 6,35 mm constitué d'une matière inerte qui peut être du verre, du "Teflon" (marque déposée) ou un plastique haute densité. Dans l'exemple décrit ci-dessous, le corps des colonnes utilisées est en polyéthylène haute-densité. Ce tube est terminé par deux embouts permettant une connexion étanche au reste de l'installation. La connexion est conçue pour résister à une pression de quelques bars.

La phase utilisée est dépendante de l'application. Dans l'exemple décrit ci-après, la phase utilisée est un composé polymérique. Cette phase est maintenue dans le tube par deux frittés en matière inox. Le volume de phase est de l'ordre de quelque millilitres. Dans l'exemple fourni ci-dessous, il est de 0,5 ml. Les frittés utilisés ont un seuil de coupure de quelques microns. Pour éviter tout colmatage intempestif, il est donc nécessaire d'utiliser des échantillons préfiltrés à 10 µm.

De manière caractéristique à l'invention, le dispositif d'extraction comporte, de part et d'autre des colonnes 3, une vanne 4 pilotable de commutation d'une colonne 3 à une autre pour mettre en action une colonne 3 apte à assurer la fonction d'extraction lorsqu'une autre colonne 3 est en état de non fonctionnement. La commutation de chaque vanne 4 de commutation autorisant la mise en fonction d'une colonne 3 apte à assurer la fonction d'extraction lorsqu'une autre colonne est en état de non fonctionnement est commandée au moins par l'intermédiaire d'un dispositif de détection de colmatage des colonnes 3 de manière à assurer un fonctionnement automatisé du dispositif d'extraction. En effet, dans ce cas, lorsqu'une colonne se colmate, l'installation commute automatiquement sur une nouvelle colonne 3.

Le dispositif de détection de l'état de colmatage des colonnes peut être constitué par un dispositif 6 de mesure de pression, tel qu'un capteur de pression à membrane affleurante. Ce dispositif 6 de mesure de pression peut être positionné entre la pompe 2 basse pression d'alimentation du dispositif d'extraction et une vanne 5, qui sera décrite ci-après, dite vanne à inversion de sens. L'utilisation d'un capteur 6 de pression à membrane affleurante permet d'éviter les volumes morts. La pression de commutation peut être programmée selon l'application.

Dans les exemples représentés, les vannes 4 de commutation utilisées sont des vannes à tiroir multi-voies dites encore vannes n voies à n-1 positions. De telles vannes sont notamment fabriquées par la Société Rhéodyne : Labpro. Elles sont de type basse pression 7 voies, 6 positions avec un connecteur d'1/16 de pouce et portent la référence Touzart et Matignon 014.439.10. Une autre vanne fabriquée par Valco, Cheminert C25Z, 6 à 10 voies, connecteur 1/16 de pouce, référence Touzart et Matignon 136.011.30, 136.011.31, 136.011.32 peut également convenir (1 pouce=2,54 cm).

Ces vannes comportent, comme la vanne 1 du dispositif de distribution, N voies périphériques reliées à une colonne 3 et une voie centrale commune apte à être reliée de manière sélective avec une voie périphérique. Cette voie centrale est en outre reliée à une vanne 5 à inversion de sens qui sera décrite ci-après.

La seule présence de ces vannes de commutation ne serait pas suffisante pour permettre à l'installation de fonctionner de manière autonome sur des périodes de temps assez longues. En conséquence, pour augmenter encore la période de fonctionnement d'une telle installation, il est nécessaire d'augmenter la durée de vie de chaque colonne. Pour ce faire, une vanne 5 à inversion de sens est interposée entre chaque vanne 4 de commutation et la pompe 2 basse pression. Cette vanne 5 à inversion de sens est donc commune à chaque vanne 4 de communication. Cette vanne 5 à inversion de sens pilotable est agencée pour imposer un sens de circulation du fluide dans l'une quelconque des colonnes 3 du dispositif d'extraction commutées par les vannes 4 de commutation et assurer le retour de ce fluide à la vanne 5 pour distribuer ensuite le fluide traité vers un circuit sélectif soit pour ranger, soit pour analyse. Cette vanne 5 à inversion de sens peut être constituée par une vanne 2 n voies 2 positions, telle qu'une vanne Rhéodyne : Labpro, basse pression, 6 voies, 2 positions, connecteur 1/16 de pouce, référence Touzart et Matignon 014.439.12 ou une vanne Valco, Cheminert C22Z, 6 à 10 voies, connecteur 1/16 de pouce, référence Touzart et Matignon 136.011.16, 136.011.17, 136.011.18 (1 pouce = 2,54 cm).

Les moyens de pilotage de la vanne 5 à inversion de sens sont asservis en fonctionnement à un cycle d'opérations préprogrammées fonctions de la préparation d'échantillon à effectuer. Ainsi, comme l'illustrent les figures, en fonction de la position de la vanne 5, la circulation de fluide s'effectuera suivant un premier sens de circulation à l'intérieur de la colonne 3 ou suivant un second sens de circulation dit à contre-courant à l'intérieur de la colonne.

L'installation comporte encore, en aval de la vanne 5 à inversion de sens et reliée à cette dernière, une vanne 7 dite de sélection pilotable pour délivrer le fluide traité soit vers un dispositif 8 d'analyse, non représenté en détail, soit vers une installation 9 de rejet ou poubelle non représentée. Contrairement aux vannes 4 de commutation, dont le pilotage est fonction des signaux fournis par le dispositif 6 de détection, les moyens de pilotage de la vanne 5 à inversion de sens et de la vanne 7 de sélection sont asservis en fonctionnement à un cycle d'opérations préprogrammées fonction de la préparation d'échantillons à effectuer. Toutefois, la commutation des vannes 4 de commutation ne peut être opérée pendant l'analyse d'un échantillon. Cette commutation n'interviendra qu'après achèvement des différents cycle d'analyse.

Pour le pilotage, l'installation intègre un ordinateur équipé d'un logiciel permettant de configurer à la demande le process d'extraction/concentration. Le logiciel est conçu pour permettre une programmation libre de chaque élément du système de façon à ce que l'opérateur puisse totalement programmer ses méthodes de concentration. L'automate de gestion du système gère une succession de séquences de pompage qui définissent une méthode de concentration. Une séquence de pompage est définie par une succession d'ordres de commutation des différentes vannes et se termine par la définition de l'action de pompage, c'est-à-dire la programmation du volume à pomper et de la vitesse ou du temps de pompage. Ces différentes séquences sont codées dans un fichier selon un langage de commande simple qui est ensuite interprété par le logiciel de gestion. Une méthode de concentration correspond à un fichier. Ce logiciel de gestion a aussi en charge la gestion de la commutation des colonnes du dispositif d'extraction. Il acquiert la mesure de pression interne du circuit de l'installation et, en fonction d'un seuil ajustable, décide de la commutation d'une nouvelle colonne. Ce logiciel tient à jour un état des différentes colonnes. Il positionne un indicateur dès lors que la dernière colonne est commutée. La fréquence des mesures est programmable en temps réel et peut être contrôlée par un automate externe.

Bien évidemment, tous les éléments de l'installation décrits ci-dessus sont constitués de matériaux inertes résistants aux liquides corrosifs sans par ailleurs relarguer de traces de composés organiques susceptibles d'interférer dans l'analyse ultérieure. Les matériaux utilisables sont notamment l'inox, les céramiques et le Téflon. Les connections hydrauliques entre les différents éléments sont assurées par des tubes en Téflon.

Grâce à une telle installation, il est possible de mettre en oeuvre des procédés dans lesquels, après chargement sur la colonne 3 de l'échantillon, tel que des eaux naturelles ou traitées éventuellement destinées à la consommation susceptibles de contenir des pesticides ou autres polluants organiques, on soumet successivement ladite colonne 3 à un cycle de rinçage, à un cycle d'élution puis à un cycle de régénération, cycle de chargement et cycle de rinçage étant opérés suivant un premier sens de circulation du fluide dans la colonne tandis que cycle d'élution et cycle de régénération sont opérés par circulation à contre-courant de fluide dans la colonne. La circulation du fluide au cours de ces cycles est représentée par un trait plus gras dans les figures 1 à 4 qui correspondent respectivement au cycle de régénération, au cycle de chargement, au cycle de rinçage et au cycle d'élution.

Par ailleurs, on soumet entre chaque cycle le circuit de l'installation à des actions de purge et de remise en condition de chaque volume mort, en particulier entre vannes.

Parallèlement à ces cycles, on détecte en temps réel et en continu l'état d'usure de la colonne 3 assurant la fonction d'extraction et on met en action, au moyen des vannes 4 de commutation, une autre colonne 3 apte à assurer la fonction d'extraction lorsque la colonne 3 active est détectée comme étant en état de non fonctionnement.

Ainsi, à titre d'exemple, un protocole opératoire est fourni ci-après. Un premier volume de 5 ml de méthanol est placé sur la colonne pour la conditionner. Puis, 5 ml d'eau distillée sont ensuite placés pour éliminer toute trace de solvant avant concentration. Ces deux étapes (figure 1) sont réalisées dans le sens inverse de la charge et à une vitesse de 5 ml/mn. La charge de l'eau (figure 2), correspondant à l'échantillon à préparer, est réalisée à 10 ml/mn. Le rinçage de la colonne (figure 3) s'effectue à 5 ml/mn dans le sens de la charge avec de l'eau distillée comprenant un certain pourcentage d'acétonitrile. Ce pourcentage peut varier en fonction des composés recherchés. Des ajouts d'acide ou de sel peuvent être réalisés en cas de mauvaise rétention des composés. L'élution de la colonne (figure 4) s'effectue dans le sens inverse de la charge à la vitesse de 1 ml/mn. Le système est calibré de façon à ne retenir que le ml d'éluat le plus concentré. La régénération de la colonne se confond avec l'étape de conditionnement de la colonne au méthanol.

Il est à noter que la pompe volumétrique basse pression ne fonctionne pas pendant une commutation des vannes 4, 5, 7. Le fichier reprogrammable pour chaque préparation d'échantillon à effectuer contient donc l'ensemble des informations nécessaires à la mise en oeuvre d'un tel protocole. Il comprend en outre des informations sur les positions devant être prises par les vannes pour chaque cycle.

L'analyse finale peut être effectuée par spectrophotométrie UV ou visible ou par toute autre méthode de détection ou de séparation pour effluent liquide, telle que par réfractométrie, fluorescence, électrochimie, conductivité, radioactivité, spectrométrie de masse, chromatographie liquide haute performance ou autre. Dans le cas d'une installation en mesure UV, on utilise de préférence un spectrophotomètre UV visible à balayage ou à barrettes de diodes doté d'un système multi-cuves permettant l'analyse sur plusieurs voies de mesure équipées avec des cuves de diamètre et de chemin optique de tailles différentes de façon à pouvoir analyser des eaux brutes chargées et un éluat de faible volume. Afin de diminuer le bruit instrumental, plusieurs acquisitions consécutives de spectres seront réalisées, les spectres étant ensuite moyennés.

L'analyse du spectre UV peut être basée sur la méthode de déconvolution proposée par le Professeur THOMAS de l'Ecole des Mines d'Ales. Cette méthode est intégrée au spectrophotomètre Sécoman de manière standard. Les colonnes 3 de l'installation précitée peuvent être utilisées un grand nombre de fois. Les tests effectués donnent un nombre d'utilisation de l'ordre de 80 avant que n'apparaissent des surpressions indicatrices d'un colmatage de la colonne. Les rendements d'extraction sont très élevés. Ils sont indépendants du vieillissement de la colonne.

## Revendications

1. Installation pour la préparation automatique d'échantillons, notamment de concentrats de composés organiques dissous dans une phase liquide, en vue d'une analyse en ligne sur un système de mesure adapté tel qu'un spectromètre UV, un dispositif à infrarouge, un fluorimètre, un spectromètre de masse ou similaire, cette installation comprenant
a) un dispositif de prélèvement d'un échantillon liquide.
b) un dispositif de distribution comportant une vanne (1) de préférence basse pression capable de sélectionner soit l'échantillon, soit l'un des différents solvants ou réactifs indispensables à un processus d'extraction liquide/solide.
c) une pompe (2) basse pression permettant d'alimenter au débit choisi un dispositif d'extraction liquide/solide,
d) un dispositif d'extraction liquide/solide constitué d'une pluralité de colonnes (3) comportant chacune au moins une phase adsorbante.
installation **caractérisée en ce que** le dispositif d'extraction comporte, de part et d'autre des colonnes (3), une vanne (4) pilotable de commutation d'une colonne (3) à une autre pour mettre en action une colonne (3) apte à assurer la fonction d'extraction lorsqu'une autre colonne (3) est en état de non fonctionnement, chaque vanne (4) de commutation étant reliée à une vanne (5) à inversion de sens commune interposée entre la pompe (2) basse pression et les vannes (4) de commutation, cette vanne (5) à inversion de sens pilotable étant agencée pour imposer un sens de circulation du fluide dans l'une quelconque des colonnes (3) du dispositif d'extraction et assurer son retour à ladite vanne (5) pour distribuer le fluide traité vers un circuit sélectif soit pour rejet, soit pour analyse.

2. Installation selon la revendication 1.
**caractérisée en ce que** la commutation de chaque vanne (4) de commutation autorisant la mise en fonction d'une colonne (3) apte à assurer la fonction d'extraction lorsqu'une autre colonne est en état de non fonctionnement est commandée au moins par l'intermédiaire d'un dispositif de détection de colmatage des colonnes (3) de manière à assurer un fonctionnement automatisé du dispositif d'extraction.

3. Installation selon la revendication 2,
**caractérisée en ce que** le dispositif de détection de l'état de colmatage des colonnes est un dispositif (6) de mesure de pression de préférence un capteur de pression à membrane affleurante.

4. Installation selon la revendication 3,
**caractérisée en ce que** le dispositif (6) de mesure de pression est positionné entre la pompe (2) basse pression d'alimentation du dispositif d'extraction et la vanne (5) à inversion de sens.

5. Installation selon l'une des revendications 1 à 4,
**caractérisée en ce qu'**elle comporte, en aval de la vanne (5) à inversion de sens et reliée à cette dernière, une vanne (7) dite de sélection pilotable pour délivrer le fluide traité soit vers un dispositif (8) d'analyse, soit vers une installation (9) de rejet.

6. Installation selon la revendication 5,
**caractérisée en ce que** les moyens de pilotage de la vanne (5) à inversion de sens sont asservis en fonctionnement à un cycle d'opérations préprogrammées fonctions de la préparation d'échantillon à effectuer.

7. Installation selon l'une des revendications 1 à 6,
**caractérisée en ce que** la vanne (4) de commutation est une vanne à tiroir multi-voies.

8. Procédé de préparation d'échantillons de fluide, en particulier de concentrats par extraction liquide/solide, en vue d'une analyse sur un système (8) de mesure adapté tel qu'un spectromètre UV, un dispositif infrarouge, un fluorimètre, un spectromètre ou similaire,
**caractérisé en ce qu'**il consiste à prélever un échantillon, à alimenter au débit choisi en échantillon ou en solvants un dispositif d'extraction à colonnes, à faire circuler au moyen d'une vanne (5) à inversion de sens l'échantillon et/ou les solvants soit dans un sens, soit dans l'autre dans ledit dispositif d'extraction, à collecter à la vanne (5) d'inversion, quel que soit le sens de circulation, le fluide traité pour l'amener vers un sélecteur (7) délivrant le fluide traité soit vers un dispositif (8) d'analyse, soit vers une installation (9) de rejet, à détecter en temps réel et en continu l'état d'usure de la colonne (3) assurant la fonction d'extraction et à mettre en action, au moyen de vannes (4) de commutation, une autre colonne (3) apte à assurer la fonction d'extraction lorsque la colonne (3) active est détectée comme étant en état de non fonctionnement.

9. Procédé selon la revendication 8,
**caractérisé en ce que**, après chargement sur la colonne (3) de l'échantillon, tel que des eaux naturelles ou traitées éventuellement destinées à la consommation susceptibles de contenir des pesticides ou autres polluants organiques, on soumet successivement ladite colonne (3) à un cycle de rinçage, à un cycle d'élution puis à un cycle de régénération, cycle de chargement et cycle de rinçage étant opérés suivant un premier sens de circulation du fluide dans la colonne tandis que cycle d'élution et cycle de régénération sont opérés par circulation à contre-courant de fluide dans la colonne.

10. Procédé selon l'une des revendications 8 et 9,
**caractérisé en ce qu'**on soumet entre chaque cycle le circuit de l'installation à des actions de purge et de remise en condition de chaque volume mort.

## Claims

1. An installation for automatic preparation of samples, especially of concentrates of dissolved organic compounds in a liquid phase for a continuous analysis in an appropriate measurement system such as a UV spectrometer, an infrared device, a fluorimeter, a mass spectrometer or similar, this installation comprising :
a) a liquid-sampling device,
b) a distribution device comprising a preferably low-pressure valve (1) able to select either the sample, or one of the different solvents or reagents essential to a liquid/solid extraction process,
c) a low-pressure pump (2) for supplying a liquid/solid extraction device at a chosen flow rate,
d) a liquid/solid extraction device made up of several columns (3) having each at least one adsorbent phase,
the installation being **characterised in that** the extracting device comprises, on either side of the columns (3), a controllable valve (4) for switching from one column (3) to an other to activate a column (3) adapted to ensure the extraction function when an other column (3) is not operational, each switch valve (4) being connected to a common controllable direction reversing valve (5) inserted between the low-pressure pump and the switch valves (4), this controllable direction reversing valve (5) being arranged so as to impose a flow direction to the fluid in any one of the columns (3) of the extracting device and to ensure its return to said valve (5) for dispensing the treated fluid towards a selective circuit either to be rejected, or to be analysed.

2. The installation of claim 1, **characterised in that** the switching of each switch valve (4) enabling the actuating of a column (3) adapted to ensure the extraction function when an other column is in a non operational state, is at least controlled by a choking-detection device of the columns (3) so as to maintain an automatic functioning of the extraction device.

3. The installation of claim 2, **characterised in that** the choking-detection device of the columns is a pressure measurement device (6), preferably a flush-membrane pressure sensor.

4. The installation of claim 3, **characterised in that** the pressure measurement device (6) is placed between the low-pressure feed pump (2) of the extraction device and the direction reversing valve (5).

5. The installation of any of claims 1 to 4, **characterised in that** it comprises, downstream the direction reversing valve (5) and connected to it, a valve (7) with a controllable selection so as to supply the treated fluid either towards an analysis device (8), or towards a waste installation (9).

6. The installation of claim 5, **characterised in that** the control means of the direction reversing valve (5) are submitted to a cycle of preprogrammed operations depending on the sample preparation to be carried out.

7. The installation of any of claim 1 to 6, **characterised in that** the switch valve (4) is a multiway valve.

8. A method for sample preparation of fluids, especially of concentrates through liquid/solid extraction for an analysis in an appropriate measurement system (8) such as a UV spectrometer, an infrared device, a fluorimeter, a spectrometer or similar, **characterised in that** it consists in sampling a sample, in feeding a column-extraction device at a chosen flow with samples or solvents, in making the sample and/or the solvents flow in one or the other direction in said extraction device by means of a direction reversing valve (5), in collecting the treated fluid at the direction reverting valve (5) independently of the flow direction in order to drive it towards a selector (7) providing the treated fluid either towards an analysis device (8) or towards a waste installation (9), in detecting in real time and continuously the wearing out state of the column (3) so as to ensure the extraction function and to activate by means of switch valves (4), an other column (3) able to ensure the extraction function when the active column (3) is detected as not being in an operational state.

9. The method of claim 8, **characterised in that** after the column (3) has been loaded with the sample, such as natural or treated water, possibly intended to consumption and which could contain pesticides or other organic pollutants, said column is successively submitted to a rinsing cycle, an elution cycle and then a regeneration cycle, the loading cycle and the rinsing cycle being carried out in a first flow direction of the fluid in the column, whereas the elution cycle and the regeneration cycle are carried out by counterflow of fluid in the column.

10. The method of claim 8 or 9, **characterised in that** the installation circuit is between each cycle submitted to draining actions and rehabilitation of any dead volume.

## Patentansprüche

1. Anlage für die automatische Zubereitung von Proben, insbesondere Konzentraten von organischen Zusammensetzungen in flüssiger Phase, zwecks einer Analyse durch einem angepassten Messsystem , wie zum Beispiel einen UV-Spektrometer, eine Infrarotvorrichtung, einen Fluorimeter, einen Massenspektrometer oder ähnliches, wobei diese Anlage
a) eine Vorrichtung zum entnehmen einer flüssigen Probe.
b) einen Verteiler mit einem Ventil (1), vorzugsweise einen Niederdruckverteiler, zum wählen entweder der Probe oder eines der für einen flüssig/fest Extraktionsvorgang erforderlichen verschiedenen Lösungsmitteln bzw Reagenzen,.
c) eine Niederdruckpumpe (2), die eine flüssig/fest Extraktionsvorrichtung mit einer gewählten Liefermenge versorgen kann.
d) eine flüssig/fest Extraktionsvorrichtung, bestehend aus mehreren Säulen (3), mit jeweils mindesten eine adsorbierende Phase
aufweist,
**dadurch gekennzeichnet, daß** die Extraktionsvorrichtung auf beiden Seiten der Säulen (3) ein steuerbares Schaltventil (4) aufweist, der von einer Säule zu einer anderen (3) umschaltet, um eine Extraktionsfunktion sicherstellende Säule (3) zu aktivieren, , wenn eine andere Säule (3) nicht-Funktionsbeteiligt ist, wobei jedes Schaltventil (4) mit einem gemeinsamen, zwischen der Niederdruckpumpe und den Schaltventilen (4) geschalteten Richtungsumkehrventil (5) verbunden ist, wobei dieses steuerbaren Richtungsumkehrventil (5) so ausgeführt ist, dass es die Richtung des flußigen Verkehrs in irgendeiner Säule der Extraktionsvorrichtung (3) fest legt und die Rückkehr der Flüßigkeit zu dem Ventil (5) sicherstellt, um die behandelte Flüßigkeit zu einer selektiven Leitung zu verteilen, und die Flüßigkeit zu analysieren oder abzuweisen.

2. Anlage nach Anspruch 1, **dadurch gekennzeichnet, dass** die Umschaltung jedes Schaltventiles (4) zur Aktivierung einer die Extraktionsfunktion sicherstellenden Säule , wenn eine andere Säule (3) nicht-fuktionsbeteiligt ist, wenigstens durch eine, die den Verstopfungszustand der Kolonne (3) erfassende Gebervorrichtung gesteuert wird, um einen automatischen Betrieb der Extraktionsvorrichtung zu gewährleisten.

3. Anlage nach Anspruch 2, **dadurch gekennzeichnet, daß** die Vorrichtung zum Erfassen des Verstopfungszustands der Säulen vorzugsweise ein Druckmessgerät (6) mit fluchtender Membrane ist.

4. Anlage nach Anspruch 3, **dadurch gekennzeichnet, daß** das Druckmessgerät (6) zwischen der die Extraktionsvorrichtung versorgende Niederdruckpumpe (2) und dem Richtungsumkehrsventil angeordnet ist.

5. Anlage nach einem der Ansprüche 1 bis 4, **dadurch gekennzeichnet, daß** sie stromabwärts des Umkehrsventils (5) und mit diesem verbunden, ein sogenanntes steuerbares Wählventil (7) aufweist, die die behandelte Flüssigkeit entweder nach einer Analysiervorrichtung (8) oder nach einer Abweisungsanlage übergibt (9).

6. Anlage nach Anspruch 5, **dadurch gekennzeichnet, daß** die Steuerungsmittel des Richtungsumkehrventils (5) durch eine Prozeßfolge von vorprogrammierten Vorgängen im Betrieb gesteuert werden, je nach der zu vorbereitenden Proben.

7. Anlage nach einem der Ansprüche 1 bis 6, **dadurch gekennzeichnet, dass** das Schaltventil (4) ein Mehrwegventil ist.

8. Verfahren für die Zubereitung von Flüssigkeitsproben, insbesondere Konzentraten durch flüßig/fest Extraktion, zwecks Analyse mit einem angepasstem Mesßsystem (8), wie zum Beispiel einem UV-Spektrometer, einer Infrarotvorrichtung, einem Fluorimeter, einem Spektrometer oder ähnliches, **gekennzeichnet durch** folgende Schritte:
proben entnehmen,
eine Säule-Extraktionsvorrichtung mit der gewählten Leistung mit Proben oder Lösungsmitteln versorgen,
die Probe und/oder Lösungsmittel entweder in die eine oder die andere Richtung mittels eines Richtungsumkehrventil (5) in dem genannten Extraktionsgerät fließen lassen,
die behandelte Flüssigkeit zu dem Richtungsumkehrventil (5) unabhängig von Stromrichtung sammeln, um sie zu einem Wählventil (7) zu bringen, der die Flüssigkeit entweder nach einer Analysevorrichtung (8) oder nach einer Abweisungsanlage (9) abgibt,
in Echtzeit und fortlaufend den Abnutzungszustand der Säule (3), die die Extraktionsfuktion ausfüllt, ermitteln, und
mittels Schaltventilen (4) eine andere Säule (3) funktionsfähig machen, die imstande ist die Extraktionsfunktion auszufüllen wenn die aktive Säule (3) als nicht-funktionsbeteiligt erfaßt wird.

9. Verfahren nach Anspruch 8, **dadurch gekennzeichnet, daß** nach Laden der Probe auf der Säule (3), wie zum Beispiel eventuell zum Verbrauch bestimmtes Pestizid oder andere organischen Versmutzungsstoffe enthaltendes Rohwasser oder geklärtes Wasser, die genannte Säule (3) einem Spülvorgang, einem Elutionsvorgang, und einem Regenerationsvorgang unterworfen wird, wobei die Laden- und Spülvorgänge in eine erste Strömungsrichtung in der Säule ausgeführt werden, während die Elutions- und Regenerationsvorgänge im Gegenstrom der Flüssigkeit in der Säule ausgeführt werden.

10. Verfahren nach Anspruch 8 oder 9, **dadurch gekennzeichnet, dass** zwischen jedem Vorgang jeder Totraum der Leitung der Anlage Entleerungs- und Regelungsbetriebenunterworfen wird.
